# DEMANDE DE BREVET EUROPEEN

(11) **EP 2 908 109 A1**
(43) Date de publication de la demande: **19.08.2015**
(21) Numéro de dépôt: 15154421.0
(22) Date de dépôt: 10.02.2015
(51) Int. Cl.: G01J 5/20, G01J 5/08

(54) **Détecteur bolométrique à structure mim incluant un élément thermomètre**

(30) Priorité: 12.02.2014 FR 1451091
(71) Demandeur: Commissariat à l'Énergie Atomique et aux Énergies Alternatives, 75015 Paris (FR)
(72) Inventeur: Palanchoke, Ujwol, 38000 Grenoble (FR); Boutami, Salim, 38100 Grenoble (FR); Ouvrier-Buffet, Jean-Louis, 74320 Sevrier (FR); Yon, Jean-Jacques, 38360 Sassenage (FR)
(74) Mandataire: Brevalex

(57) **Abrégé**

Détecteur bolométrique (100) comportant au moins :
- un substrat (102) ;
- une membrane (104) suspendue au-dessus du substrat (102) par des éléments de support (108) ;
- un élément absorbeur comprenant au moins une structure MIM formée d'un élément métallique inférieur (112), d'un élément métallique supérieur (114) et d'un élément diélectrique (110, 116, 118, 120, 122) disposé entre l'élément métallique inférieur (112) et l'élément métallique supérieur (114) ;
- un élément thermomètre comprenant au moins un matériau thermométrique (116) ;
dans lequel la membrane (104) comporte au moins l'élément métallique supérieur (114) de la structure MIM et le matériau thermométrique (116), et dans lequel le matériau thermométrique (116) fait partie de l'élément diélectrique (110, 116, 118, 120, 122) de la structure MIM.

## Description

### DOMAINE TECHNIQUE ET ART ANTÉRIEUR

L'invention concerne le domaine des détecteurs thermiques, et plus précisément celui des détecteurs thermiques non refroidis tels que des détecteurs bolométriques de type résistif. Les détecteurs bolométriques selon l'invention sont avantageusement utilisés pour réaliser une détection de longueurs d'ondes dans le domaine infrarouge.

Pour réaliser une détection dans le domaine infrarouge, un détecteur infrarouge thermique non refroidi comporte généralement un élément sensible dont la température augmente lorsque celui-ci reçoit un rayonnement infrarouge dont la longueur d'onde appartient par exemple à la bande III (entre 8 à 12 µm) qui est caractéristique de la température et de l'émissivité des éléments observés par ce type de détecteur. L'augmentation de température de l'élément sensible engendre une variation d'une propriété électrique du matériau de cet élément sensible : apparition de charges électriques dans le matériau de l'élément sensible par effet pyroélectrique, variation de la capacité du matériau de l'élément sensible par changement de sa constante diélectrique, variation de la résistance électrique du matériau semi-conducteur ou métallique de l'élément sensible, etc.

Pour obtenir un fonctionnement performant d'un tel détecteur infrarouge thermique, le matériau de l'élément sensible doit remplir trois conditions principales : il doit avoir une faible capacité thermique, une bonne isolation thermique de la couche active (qui comporte l'élément sensible) vis-à-vis de son support (ces deux premières conditions impliquant une réalisation de l'élément sensible en couche mince) et enfin une forte sensibilité de l'effet de conversion de l'échauffement du matériau en un signal électrique.

Des imageurs infrarouges monolithiques fonctionnant à température ambiante sont par exemple fabriqués en connectant directement une matrice d'éléments sensibles à un circuit de multiplexage en silicium de type CMOS ou CCD.

Pour gagner en performances, le détecteur infrarouge thermique peut être encapsulé sous vide ou dans une atmosphère comprenant un gaz peu conducteur de la chaleur. Le boîtier dans lequel le détecteur infrarouge thermique est encapsulé comporte alors une fenêtre transparente vis-à-vis du rayonnement infrarouge destiné à être détecté par le détecteur infrarouge thermique.

Dans un détecteur bolométrique de type résistif, le rayonnement incident est absorbé par l'élément sensible du détecteur, ce qui provoque une augmentation de sa température et induit une variation de la résistance électrique de l'élément sensible du détecteur. Cette variation de résistance engendre une variation de tension ou de courant aux bornes du détecteur, formant le signal délivré par le détecteur.

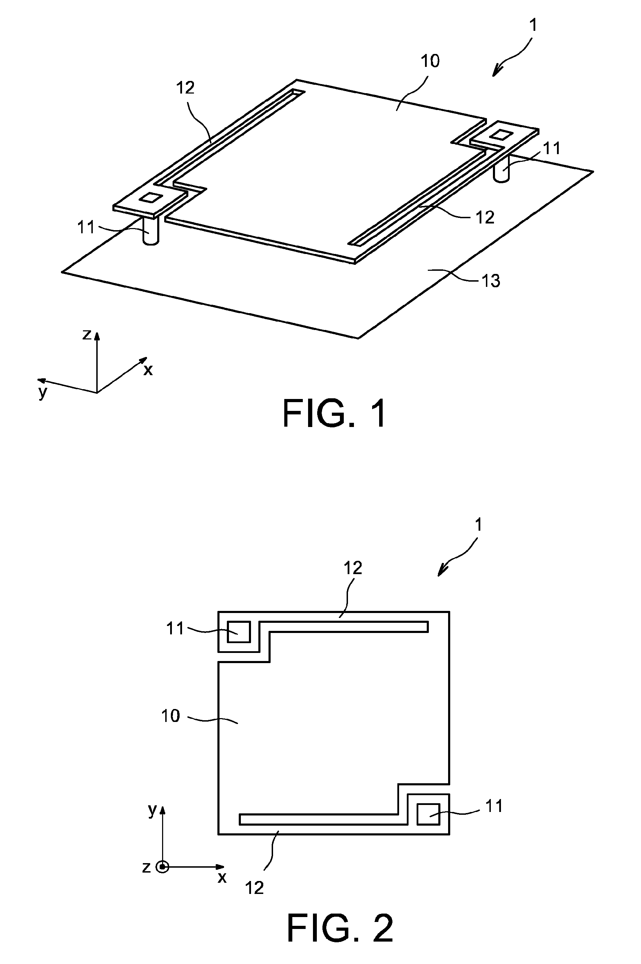

Les figures 1 et 2 représentent respectivement une vue en perspective et une vue de dessus d'un détecteur thermique de rayonnements électromagnétiques 1, c'est-à-dire un bolomètre. Ce type de détecteur 1 comporte une fine membrane 10 suspendue au-dessus d'un substrat support 13. Cette membrane 10 comporte une première couche de matériau formant l'élément absorbeur du détecteur 1 et une deuxième couche de matériau formant l'élément thermomètre du détecteur 1. D'autres détecteurs, analogues à celui représenté sur les figures 1 et 2, sont généralement présents sur le substrat support 13. La membrane 10 est suspendue mécaniquement au-dessus substrat 13 par l'intermédiaire d'éléments de support 11 auxquels sont fixés des bras d'isolation thermique 12 qui sont reliés mécaniquement à la membrane 10.

Sous l'effet du rayonnement incident reçu par le détecteur 1, la première couche de la membrane 10 formant l'élément absorbeur s'échauffe et transmet sa température à la deuxième couche de la membrane 10 formant l'élément thermomètre. Selon l'état de l'art, différents types d'élément thermomètre sont possibles parmi lesquels le thermistor est une option largement répandue. Le substrat support 13 comporte un circuit électronique intégré sur un wafer de silicium, ce circuit comprenant d'une part des dispositifs de stimuli et de lecture de l'élément thermomètre de chacun des détecteurs 1, et d'autre part des composants de multiplexage qui permettent de mettre en série les signaux issus des différents éléments thermomètres vers un nombre réduit de sorties afin que ces signaux puissent être exploités par un système d'imagerie usuel. La sensibilité des détecteurs thermiques est notoirement améliorée grâce à la présence des bras d'isolation thermique 12 dans la liaison thermique entre le substrat support 13 et la membrane 10, ces bras permettant de limiter les pertes thermiques de la membrane 10 et par conséquent de préserver son échauffement.

L'interconnexion électrique entre l'élément thermomètre du détecteur 1 et les éléments de lecture du circuit électronique est assurée par une couche électriquement conductrice, généralement métallique, qui est disposée sur les bras d'isolation thermique 12, et par les éléments de support 11 qui sont électriquement conducteurs.

Le matériau sensible (élément absorbeur) de la membrane 10 peut être un matériau semi-conducteur tel que du silicium polycristallin ou amorphe, de type p ou n, faiblement ou fortement résistif. Il peut s'agir également d'un oxyde de vanadium (V₂O₅ ou VO₂) élaboré dans une phase semi-conductrice. Généralement, le matériau sensible repose sur un support isolant de la membrane 10, par exemple à base de SiO₂, de SiO, de SiN, ou de ZnS, qui assure la rigidité mécanique de la membrane 10. Il peut aussi être totalement encapsulé avec l'un de ces matériaux isolants. Différentes évaluations montrent que les composés à base d'oxyde de vanadium sont plus performants en termes de TCR (variation relative de la résistance avec la température) et de bruit en 1/f que les matériaux métalliques comme le platine ou d'autres matériaux semi-conducteurs classiques comme le silicium amorphe ou le germanium amorphe ou leurs composés.

Cependant, il existe d'autres matériaux présentant un coefficient de température élevé.

La taille d'un imageur étant fixée par le coût du composant et de l'optique, la seule manière d'accroître la résolution spatiale d'un imageur d'une taille donnée est de réduire le pas avec lequel sont réalisés les détecteurs de cet imageur. Mais à technologie et à architecture constantes, la réduction de la surface du détecteur engendre une diminution de la résolution thermique du détecteur du fait principalement de la dégradation de la réponse (sensibilité) du détecteur. En complément de l'amélioration des performances du matériau thermométrique, il convient également d'accroître, ou tout au moins de maintenir à un haut niveau de performances, la résistance thermique et le facteur de remplissage des détecteurs.

Dans la pratique, le système est optimisé lorsque le pas du détecteur élémentaire est compris entre environ 1 à 2 fois la longueur d'onde moyenne destinée à être détectée. Cette approche présuppose un facteur de remplissage voisin de 100% qui est toujours recherché dans le domaine des bolomètres car par construction, il n'existe pas de possibilité d'inter-modulation par le substrat (réticulation des détecteurs). Ainsi, pour un dispositif détecteur opérant dans la bande 8-14 µm, le pas des détecteurs peut être raisonnablement réduit jusqu'à environ 10 µm.

Outre la réduction du pas, il existe également d'importantes perspectives en matière de matrices de détecteurs bolométriques sélectifs en longueur d'onde avec l'intégration de filtres/d'absorbeurs sélectifs métalliques directement sur le détecteur, sans insertion d'un filtre spectral entre la scène et le détecteur. Le document "Spectral selectivity in infrared thermal detection" de Joseph J. Talghader et al., Light: Science & Application (2012) montre différents développements dans ce domaine. Ces perspectives d'amélioration (réduction du pas, absorption sélective du rayonnement) ne doivent toutefois pas s'obtenir aux dépens de la constante de temps thermique de ces détecteurs.

Des structures métalliques périodiques peuvent être utilisées comme filtres dans l'infrarouge. Ces filtres peuvent être introduits logiquement sur le chemin optique en amont de la structure bolométrique. Une autre possibilité consiste à réaliser une absorption sélective directement au niveau de la planche bolométrique, comme décrit dans le document FR 2 941 297. Dans cette alternative, des motifs métalliques périodiques sont réalisés directement sur la planche bolométrique et correspondent au matériau thermomètre du détecteur. La présence d'une structure périodique métallique constituée d'une part des structures d'ancrage (clous) et d'autre part de motifs intégrés sur la planche et dans le système d'isolation thermique réalise un filtre réfléchissant permettant de détecter des rayonnements électromagnétiques selon certaines longueurs d'ondes. Une conversion localisée du matériau thermométrique semi-conducteur (ferrite semi-conductrice) en un matériau métallique (fer) de forte conductivité permet donc d'ajouter une fonction supplémentaire aux détecteurs sans modification du procédé de fabrication des détecteurs bolométriques. Les caractéristiques du filtre sont déterminées par le pas des motifs et leurs dimensions. Les motifs peuvent être des ronds, des carrés, des triangles, des croix. Selon le pas du pixel et la longueur d'onde à réfléchir, certains motifs doivent être scindés en deux parties. Tant que la césure entre ces parties est de dimension très petite devant la longueur d'onde, le fonctionnement du filtre n'est pas altéré.

La proportion de matériau semi-conducteur converti en matériau métallique se situe entre 25% et 50% du matériau semi-conducteur initialement déposé.

Or, cela a pour effet de modifier notablement les lignes de courant dans le matériau thermomètre par effet de constriction, et donc d'introduire du bruit basse fréquence supplémentaire. De plus, la conversion du matériau semi-conducteur en matériau métallique qui doit être réalisée limite les matériaux utilisables pour réaliser ce type de structure : il n'est par exemple pas possible d'utiliser du silicium amorphe.

Les documents "Wavelength-tunable microbolometers with metamaterial absorbers" de Thomas Maier and Hubert Brückl, OPTICS LETTERS / Vol 34, N° 19 / October 1, 2009, et "Multispectral microbolometers for the midinfrared" de Thomas Maier and Hubert Brückl, OPTICS LETTERS / Vol 34, N° 19 / November 15, 2010, décrivent une structure périodique métallique disposée sur la planche bolométrique.

L'absorption sélective est réalisée dans le métamatériau de type MIM (c'est-à-dire correspondant à un empilement de type métal-isolant-métal) élaboré au-dessus de la planche bolométrique. A résistance thermique identique, cette configuration a toutefois pour inconvénient d'augmenter la constante de temps thermique d'au moins un facteur 2, limitant donc la fréquence de capture pouvant être obtenue avec de tels détecteurs. Cette approche n'est donc plus compatible avec un fonctionnement en mode imageurs (par exemple pour réaliser le suivi d'un nuage de produit chimique s'échappant d'un site industriel). Il est mentionné dans ces documents que la présence du film métallique continu dans la totalité de la membrane et donc aussi dans les bras d'isolation permet de maintenir constante la capacité calorifique du détecteur en réduisant la résistance thermique. Cette approche, difficile à mettre en oeuvre d'un point de vue technologique, se traduit par une dégradation du rapport signal sur bruit (c'est-à-dire une augmentation du NEDT, ou « Noise Equivalent Differential Temperature ») d'au moins un facteur 2.

Le document FR 2 977 937 A1 décrit un détecteur bolométrique comportant une structure MIM centrée et de dimensions réduites par rapport à la surface totale du détecteur. La réduction de la taille de l'élément absorbeur laisse ainsi une plus grande surface pour développer les bras d'isolation thermique du détecteur. Ce type de détecteur possède la caractéristique d'être sélectif et de petit pas. Toutefois, cette structure engendre également une augmentation de la constante de temps thermique du détecteur, ce qui limite la fréquence de capture pouvant être obtenue avec ce type de détecteur.

Le matériau constituant l'élément thermomètre d'un détecteur est pratiquement toujours la source de bruit basse fréquence. Ceci provient de son élaboration réalisée à basse température en raison de l'approche « above IC » largement pratiquée dans le domaine. Aussi, pour réduire son impact sur la performance en termes de NEDT, on tend à accroître son volume et donc la capacité calorifique de la planche bolométrique.

La constante de temps thermique des détecteurs bolométriques est déterminée par le produit de la résistance thermique et de la capacité calorifique. Sa spécification résulte de « considérations systèmes ». Il s'agit d'une contrainte au niveau de la conception (CAO, technologie). En pratique, arbitrer entre la résistance thermique et la capacité calorifique du détecteur consiste à favoriser le signal au dépend du niveau de bruit ou inversement. Il est d'ailleurs plus pertinent d'accroître la résistance thermique que le volume du matériau constituant le détecteur.

De plus, incorporer une structure supplémentaire sur la membrane afin d'obtenir une fonction particulière, comme par exemple une absorption sélective de certaines longueurs d'ondes, se traduit immanquablement par une dégradation d'un des paramètres constituant la performance des détecteurs bolométriques, à savoir la constante de temps thermique ou le niveau de bruit.

### EXPOSÉ DE L'INVENTION

Un but de la présente invention est de proposer un nouveau type de détecteur bolométrique qui soit sélectif vis-à-vis de longueurs d'ondes destinées à être détectées et optimisé en termes de bruit basse fréquence et de constante de temps thermique, qui puisse être réalisé avec un grand nombre de matériaux, et dont la constante de temps thermique soit compatible avec un fonctionnement du détecteur bolométrique en mode imageur.

Pour cela, la présente invention propose un détecteur bolométrique comportant au moins :
- un substrat ;
- une membrane suspendue au-dessus, ou en regard, du substrat par des éléments de support ;
- un élément absorbeur comprenant au moins une structure MIM formée d'un élément métallique inférieur, d'un élément métallique supérieure et d'un élément diélectrique disposé entre l'élément métallique inférieur et l'élément métallique supérieur ;
- un élément thermomètre comprenant au moins un matériau thermométrique ;
dans lequel la membrane comporte au moins l'élément métallique supérieur de la structure MIM et le matériau thermométrique, et dans lequel le matériau thermométrique fait partie de l'élément diélectrique de la structure MIM.

L'élément diélectrique de la structure MIM peut correspondre à un élément comprenant au moins une portion de matériau isolant, ou semi-conducteur, de résistivité électrique supérieure à environ 0,1 Ω.cm et de permittivité dont la valeur de la partie réelle est positive et dont la valeur de la partie imaginaire est inférieure à environ 20 %, ou inférieure à environ 10 %, de celle de la partie réelle à une longueur d'onde pour laquelle le rendement d'absorption du détecteur bolométrique est maximal.

Le détecteur bolométrique selon l'invention propose donc de réaliser une structure absorbante en utilisant le matériau thermométrique comme un élément constitutif de l'élément absorbeur qui comporte une ou plusieurs structures de type MIM (Métal-Isolant-Métal) dans le but de réaliser des imageurs bolométriques sélectifs performants. Ainsi, en utilisant le matériau thermométrique pour former une partie de l'élément diélectrique de la structure MIM, le détecteur bolométrique selon l'invention présente une bonne constante de temps thermique qui est compatible avec une utilisation du détecteur bolométrique au sein d'un imageur. De plus, la ou les structures MIM du détecteur bolométrique permettent d'obtenir une bonne sélectivité qui est en outre facilement paramétrable selon les caractéristiques avec lesquelles sont réalisées les structures MIM. Enfin, la structure d'un tel détecteur bolométrique ne limite pas le choix des matériaux utilisables pour former l'élément absorbeur du détecteur, ce qui ne pénalise pas les performances du tel détecteur bolométrique à cause du bruit basse fréquence qui reste faible.

Un tel détecteur bolométrique est bien adapté pour réaliser une détection de longueurs d'ondes appartenant à la bande III, c'est-à-dire comprises entre environ 8 µm et 12 µm.

L'expression « structure MIM » désigne ici un empilement comportant au moins un élément diélectrique disposé entre un élément métallique supérieur et un élément métallique inférieur, et apte à réaliser une absorption sélective de certaines longueurs d'ondes selon ses dimensions et les matériaux de la structure.

La structure MIM est apte à réaliser une absorption sélective des longueurs d'onde destinées à être détectées par le détecteur bolométrique en excitant des résonances plasmoniques à ces longueurs d'ondes.

La structure MIM peut présenter une sélectivité en longueur d'onde telle que la largeur à mi-hauteur de la courbe d'absorption de la structure MIM soit inférieure à λ/10, avec λ correspondant à la longueur d'onde pour laquelle l'absorption de la structure MIM est maximale.

La structure MIM peut être telle que les éléments métalliques supérieur et inférieur ont des pouvoirs réflecteurs sensiblement égaux, c'est-à-dire tels que les impédances R1 et R2 des deux éléments métalliques soient telles que 0,1.R1 < R2 < 10.R1, avec R1 et R2 en Ω par carré.

Le matériau thermométrique peut comporter une résistivité électrique supérieure à environ 0,1 Ω.cm et une permittivité dont une valeur de la partie réelle est positive et dont une valeur de la partie imaginaire est inférieure à environ 20 %, ou inférieure à environ 10 %, de celle de la partie réelle à une longueur d'onde pour laquelle le rendement d'absorption du détecteur bolométrique est maximal. Ainsi, le matériau thermométrique peut être un semi-conducteur tel que du a-Si, du a-SiGe, de l'oxyde de vanadium, du FeO, du Fe₃O₄, plus généralement un oxyde métallique.

Une distance entre l'élément métallique inférieur et l'élément métallique supérieur peut être inférieure ou égale environ λ/(4n), ou avantageusement égale à environ λ/(10n), avec λ correspondant à une longueur d'onde pour laquelle le rendement d'absorption du détecteur bolométrique est maximal et n correspondant à l'indice de réfraction effectif de la structure MIM.

Selon un premier mode de réalisation, la membrane peut comporter l'élément métallique inférieur de la structure MIM. Dans cette configuration, la structure MIM est formée en totalité par la membrane du détecteur bolométrique.

Dans ce cas, le détecteur bolométrique peut comporter en outre un réflecteur disposé sur le substrat, et une cavité réflectrice formée entre le réflecteur et l'élément métallique inférieur de la structure MIM telle qu'une distance entre le réflecteur et l'élément métallique inférieur de la structure MIM est égale à environ la moitié d'une longueur d'onde pour laquelle le rendement d'absorption du détecteur bolométrique est maximal.

Selon un autre mode de réalisation, l'élément métallique inférieur de la structure MIM peut être disposé sur le substrat tel qu'un espace vide faisant partie de l'élément diélectrique de la structure MIM soit disposé entre la membrane et l'élément métallique inférieur. Dans cette configuration, la membrane ne forme qu'une partie de la structure MIM du détecteur bolométrique.

La membrane peut comporter en outre une première couche diélectrique isolant électriquement l'élément métallique supérieur vis-à-vis du matériau thermométrique, et une deuxième couche diélectrique isolant électriquement le matériau thermométrique vis-à-vis de l'élément métallique inférieur, et la première couche diélectrique et la deuxième couche diélectrique peuvent faire parties de l'élément diélectrique de la structure MIM.

L'élément absorbeur peut comporter plusieurs structures MIM comportant chacune un élément métallique supérieur distinct des éléments métalliques supérieurs des autres structures MIM, et dans lequel le matériau thermométrique est commun aux structures MIM.

Dans ce cas, chaque structure MIM peut comporter un élément métallique inférieur distinct des éléments métalliques inférieurs des autres structures MIM, ou les structures MIM peuvent comporter un élément métallique inférieur commun à toutes les structures MIM.

Le matériau thermométrique peut être relié électriquement à un circuit électronique du substrat par au moins une couche électriquement conductrice de la membrane et par les éléments de support.

La membrane peut être reliée mécaniquement et électriquement aux éléments de support par des bras d'isolation thermique. Ces bras d'isolation thermique peuvent être formés par des matériaux présents dans la membrane.

L'invention concerne également un dispositif de détection thermique comportant plusieurs détecteurs bolométriques tels que décrits ci-dessus, lesdits détecteurs bolométriques étant disposés en formant une matrice.

Les détecteurs bolométriques peuvent être agencés en formant plusieurs sous-matrices, les détecteurs bolométriques de chacune desdites sous-matrices pouvant être aptes à réaliser une détection d'une gamme de longueurs d'ondes différentes de celles destinées à être détectées par les détecteurs bolométriques des autres sous-matrices.

La matrice peut comporter au moins un détecteur bolométrique d'ébasage comportant une membrane suspendue au-dessus du substrat et reliée thermiquement au substrat.

La matrice peut comporter au moins un détecteur bolométrique de référence ne comportant pas de structure MIM.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- les figures 1 et 2 représentent schématiquement un détecteur infrarouge thermique selon l'art antérieur ;
- les figures 3A et 3B représentent respectivement une vue en coupe de profil et une vue de dessus schématique d'un détecteur bolométrique, objet de la présente invention, selon un premier mode de réalisation ;
- la figure 4 représente le rendement d'absorption en fonction de la longueur d'onde d'un détecteur bolométrique selon le premier mode de réalisation ;
- les figures 5 et 6 représentent schématiquement une vue en coupe de profil d'un détecteur bolométrique, objet de la présente invention, respectivement selon un deuxième et un troisième mode de réalisation ;
- la figure 7 représente schématiquement une partie d'un dispositif de détection multispectral, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

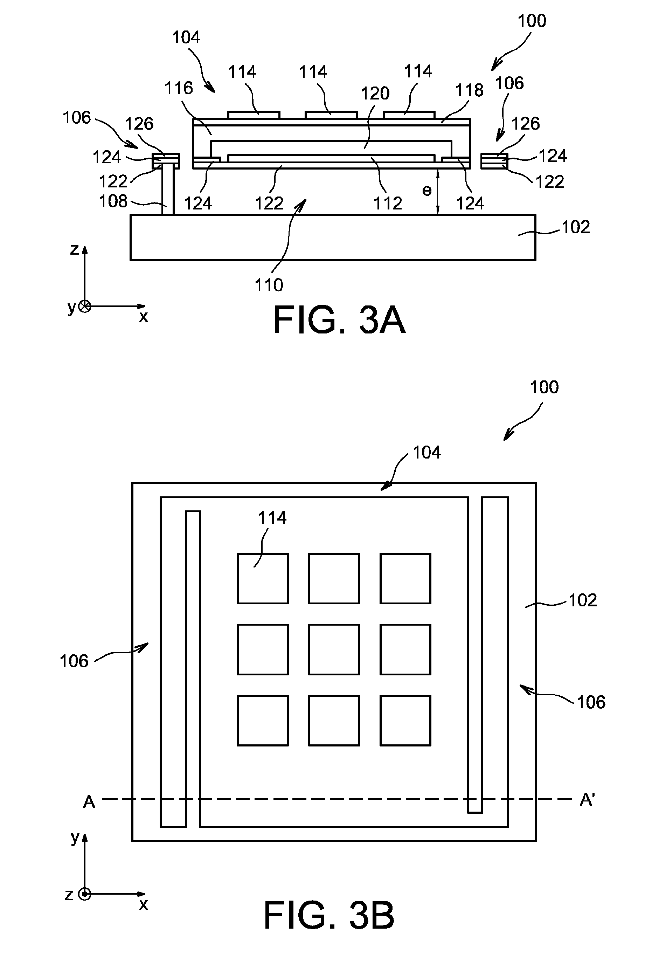

On se réfère tout d'abord aux figures 3A et 3B qui représentent respectivement une vue en coupe de profil et une vue de dessus d'un détecteur bolométrique 100, ou détecteur thermique infrarouge, selon un premier mode de réalisation. La vue en coupe de profil représentée sur la figure 3A est réalisée le long d'un axe AA' représenté sur la figure 3B. Le détecteur bolométrique 100 correspond à un bolomètre ou micro-bolomètre destiné à réaliser une détection dans le domaine infrarouge, notamment dans la bande III c'est-à-dire une détection de longueurs d'ondes comprises entre environ 8 µm et 12 µm.

Le détecteur bolométrique 100 comporte un substrat 102, comprenant par exemple un wafer, ou plaquette, de silicium, formant un support mécanique du détecteur bolométrique 100. Le substrat 102 comporte notamment un circuit électronique intégré (non visible sur les figures 3A et 3B) permettant d'alimenter électriquement le détecteur bolométrique 100 et également de lire les signaux délivrés par le détecteur bolométrique 100. Ce circuit électronique peut également comporter un circuit de multiplexage permettant le traitement de signaux délivrés par plusieurs détecteurs bolométriques 100, similaires à celui représentés sur les figures 3A et 3B, réalisés au-dessus du substrat 102. Chaque détecteur bolométrique 100 correspond à un pixel d'une matrice de détection formée au-dessus du substrat 102 et qui est reliée électriquement au circuit électronique.

Le détecteur bolométrique 100 comporte une membrane 104 suspendue au-dessus, ou en regard, du substrat 102 via des bras d'isolation thermique 106 auxquels la membrane 104 est reliée mécaniquement et via des éléments de support 108, formant des plots d'ancrage, ou clous, assurant le maintien mécanique de la membrane 104 et des bras d'isolation thermique 106 au-dessus du substrat 102. Un espace vide 110, formant une cavité d'épaisseur e (cette épaisseur correspondant à la dimension entre la membrane 104 et le substrat 102) est présent entre le substrat 102 et la membrane 104, ainsi qu'entre le substrat 102 et les bras d'isolation thermique 106. L'isolation thermique entre la membrane 104 et le substrat 102 est assurée par les bras d'isolation thermique 106 ainsi que par l'espace vide 110.

La membrane 104 comporte des éléments formant à la fois l'élément absorbeur et l'élément thermomètre du détecteur bolométrique 100. L'élément absorbeur est formé de plusieurs structures MIM réalisées les unes à côté des autres, avantageusement sous la forme d'une matrice à deux dimensions de N structures MIM. Sur l'exemple des figures 3A et 3B, la membrane 104 comporte 9 structures MIM disposées sous la forme d'une matrice 3x3. En variante, il est par exemple possible d'avoir une matrice de 4x4 ou 5x5 structures MIM. De manière générale, la membrane 104 comporte un nombre N de structures MIM compris entre 1 et 25.

Chacune des structures MIM comporte un élément métallique inférieur 112, réalisé sous la forme d'une portion d'une couche métallique qui, dans le premier mode de réalisation, est commune à l'ensemble des structures MIM de la membrane 104, ce qui permet de maximiser l'absorption sélective réalisée par les structures MIM du détecteur bolométrique 100. Chacune des structures MIM comporte également un élément métallique supérieur 114. Chaque élément métallique supérieur 114 a ici une section, dans un plan parallèle à une face du substrat 102 en regard de laquelle se trouve la membrane 104 (parallèle au plan (X,Y) sur les figures 3A et 3B), de forme carrée. En variante, la forme des éléments métalliques supérieurs 114 pourrait être différente, par exemple ronde, rectangulaire, triangulaire, cruciforme, etc. Les éléments métalliques 112 et 114 sont avantageusement à base d'un ou plusieurs matériaux utilisés pour les interconnections des circuits intégrés, comme par exemple l'aluminium, le tungstène, le cuivre, le titane, etc.

Par rapport à un élément absorbeur qui serait formé d'une seule structure MIM, l'utilisation de plusieurs éléments métalliques supérieurs 114 pour former plusieurs structures MIM permet non seulement d'améliorer la sélectivité de la détection réalisée par le détecteur bolométrique 100, mais également de capter plus de lumière, c'est-à-dire d'améliorer le rendement d'absorption du détecteur bolométrique 100, en raison de la plus grande quantité de lumière incidente qui est filtrée / absorbée grâce au plus grand nombre de structures MIM.

Les épaisseurs de l'élément métallique inférieur 112 et des éléments métalliques supérieurs 114 sont faibles afin de ne pas accroître la capacité calorifique de la membrane 104, et sont en outre supérieure à environ 2 fois l'épaisseur de peau des matériaux utilisés. Les épaisseurs (dimensions selon l'axe Z) des éléments métalliques 112 et 114 sont par exemple comprises entre environ 40 nm et 100 nm. En outre, pour éviter que ces éléments métalliques 112 et 114 réalisent une absorption non sélective de longueurs d'ondes, les éléments métalliques 112 et 114 comportent avantageusement une résistance par carré inférieure à environ 1 Ohm/carré.

Enfin, les structures MIM comporte également, entre l'élément métallique inférieur 112 et les éléments métalliques supérieurs 114, des éléments diélectriques permettant aux structures MIM d'exciter des résonances plasmoniques à des longueurs d'ondes données destinées à être détectées par le détecteur bolométrique 100, conférant ainsi une bonne sélectivité spectrale au détecteur bolométrique 100. Les résonances plasmoniques se produisent latéralement (dans le plan (X,Y)) dans les éléments diélectriques des structures MIM, en regard des éléments métalliques supérieurs 114, comme dans une cavité de type Fabry-Pérot.

Ces éléments diélectriques comprennent un matériau thermométrique 116 servant donc à la fois d'élément thermomètre du détecteur bolométrique 100 et d'élément diélectrique, ou isolant, des structures MIM qui forment ensemble l'élément absorbeur du détecteur bolométrique 100. L'épaisseur (dimension selon l'axe Z) de la couche thermométrique 116 est par exemple comprise entre environ 20 nm et 300 nm. Les éléments diélectriques des structures MIM sont également formés par une première couche diélectrique 118, ici communes à toutes les structures MIM et qui assure également le rôle d'isolant électrique entre les éléments métalliques supérieurs 114 et le matériau thermométrique 116, et donc entre l'élément thermomètre et l'élément absorbeur du détecteur bolométrique 100, ainsi qu'une deuxième couche diélectrique 120 qui assure en outre le rôle d'isolant électrique entre l'élément métallique inférieur 112 et le matériau thermométrique 116. La première couche diélectrique 118 et la deuxième couche diélectrique 120 correspondent chacune à une couche diélectrique ou un empilement de plusieurs couches diélectriques très minces, dont l'épaisseur est par exemple comprise entre environ 5 nm et 100 nm, ou entre environ 5 nm et 20 nm, et comportant par exemple du SiO₂, du ZnS ou du SiN afin d'assurer la meilleure isolation électrique possible entre le matériau thermométrique 116 et les éléments métalliques 112 et 114. Le ou les matériaux et épaisseurs de ces couches diélectriques 118, 120 sont également choisis tels que ces couches soient transparentes ou faiblement absorbantes vis-à-vis des longueurs d'ondes destinées à être détectées par le détecteur bolométrique 100.

Les valeurs des longueurs d'ondes qui sont détectées dépendent notamment des dimensions, dans le plan (X,Y), et de la période (ou pas) des éléments métalliques supérieurs 114 des structures MIM. La dimension latérale d'un élément métallique supérieur 114 fixe notamment la longueur d'onde pour laquelle l'absorption réalisée par la structure MIM comportant cet élément est maximale. Par exemple, lorsque la largeur d'une structure MIM varie de plus ou moins 0,1 µm, la longueur d'onde d'absorption maximale varie alors de plus ou moins 1 µm. Ainsi, chacun des éléments métalliques supérieurs 114 peut comporter, dans le plan (X,Y), des dimensions (correspondant par exemple aux dimensions des côtés ou du diamètre, selon la forme des éléments) égales à environ λ/(2n), avec λ correspondant à la longueur d'onde pour laquelle le rendement d'absorption du détecteur bolométrique 100 est maximal, et n correspondant à l'indice de réfraction effectif de la structure MIM et dont la valeur est proche de l'indice de réfraction moyen des couches comprises entre les éléments métalliques de la structure MIM, ou un multiple impair de λ/(2n). En tolérant une variation de +/- 0,2 µm sur la position de la valeur maximale de l'absorption réalisée par la structure MIM, la valeur λ/(2n) ou celle d'un multiple impair de λ/(2n) choisie pour les dimensions latérales de la structure MIM, et notamment de l'élément métallique supérieur 114, peut varier de +/- 0,02 µm. De plus, les éléments métalliques supérieurs 114 peuvent être disposés les uns à côté des autres avec une période inférieure à λ.

Dans chacune des structures MIM, l'épaisseur totale des éléments diélectriques disposés entre l'élément métallique supérieur 114 et l'élément métallique inférieur 112, c'est-à-dire la somme des épaisseurs de la première couche diélectrique 118, de la deuxième couche diélectrique 120 et du matériau thermométrique 116, et qui correspond à la distance entre les éléments métalliques 112 et 114, est inférieure ou égale à environ λ/(4n). Avantageusement, cette épaisseur totale des éléments diélectriques des structures MIM est inférieure ou égale à environ λ/(10n).

Le détecteur 100 comporte en outre une troisième couche diélectrique 122 qui est commune à la membrane 104 et aux bras d'isolation thermique 106, et sur laquelle est disposée une couche électriquement conductrice 124 qui est également commune à la membrane 104 et aux bras d'isolation thermique 106. La couche électriquement conductrice 124, qui est par exemple à base de Ti, de TiN ou de Pt, a par exemple une épaisseur comprise entre environ 5 nm et 100 nm et présente une résistance par carré comprise entre environ 100 et 1000 Ohm par carré. La troisième couche diélectrique 122 est par exemple à base de SiO₂ ou de SiON, et comporte une épaisseur par exemple comprise entre environ 5 nm et 50 nm. Enfin, des portions diélectriques 126 recouvrent des portions de la couche électriquement conductrice 124 se trouvant dans les bras d'isolation thermique 106. Le matériau et l'épaisseur des portions diélectriques 126 sont par exemple similaires à ceux de la troisième couche diélectrique 122.

Dans la membrane 104, des portions de la couche électriquement conductrice 124 sont en contact électriquement avec le matériau thermométrique 106, permettant ainsi d'assurer l'alimentation électrique de la membrane 104 et la lecture des signaux de détection produits. De plus, dans les bras d'isolation thermique 106, des portions de la couche électriquement conductrice 124 sont en contact électriquement avec les éléments de support 108. Ainsi, du fait que les éléments de support 108 sont à base d'un matériau électriquement conducteur, comme par exemple de l'Al, du Cu ou du WSi, et sont reliés électriquement à l'étage d'entrée du circuit électronique intégré au substrat 102, et du fait que les portions de la couche électriquement conductrice 124 de la membrane 104 et des bras d'isolation thermique 106 forment une liaison électrique continue, le matériau thermométrique 116 est relié électriquement au circuit électronique intégré du substrat 102 via les éléments de support 108 et la couche électriquement conductrice 124.

Les matériaux et les épaisseurs des éléments formant la membrane 104 sont également choisis tels que la membrane 104 ait une bonne tenue mécanique au-dessus du substrat 102 afin d'éviter un fléchissement de la membrane 104.

Dans le détecteur bolométrique 100, le matériau thermométrique 116 est avantageusement utilisé à la fois comme élément thermomètre du détecteur bolométrique 100 et comme élément diélectrique de l'élément absorbeur du détecteur bolométrique 100, au sein des structures MIM du détecteur bolométrique 100. Ces structures MIM confèrent une grande sélectivité des longueurs d'ondes détectées par le détecteur bolométrique 100, cette sélectivité étant aisément ajustée via le choix des dimensions, et donc également du nombre, de structures MIM présentes dans la membrane 104. Pour que le matériau thermométrique 116 puisse remplir ces deux fonctions, celui-ci est avantageusement choisi parmi les matériaux dont la résistivité électrique est supérieure ou égale à environ 0,1 Ohm.cm et dont la constante diélectrique, ou permittivité, à la longueur d'onde pour laquelle le rendement d'absorption du détecteur bolométrique 100 est maximal, a une partie réelle positive et une partie imaginaire nulle ou très faible devant la partie réelle, par exemple inférieure à environ deux dixièmes (20 %) ou un dixième (10 %) de la partie réelle. Ainsi, le matériau thermométrique 116 est par exemple un semi-conducteur amorphe ou polycristallin tel que du Si, a-Si, du a-Si:H, du Ge, du a-Ge, du a-Ge:H, du SiGe, du a-SiGe, du a-SiGe:H, du SiC, du a-SiC, du a-SiC:H, ou de l'oxyde de vanadium, du FeO, du Fe₃O₄, ou plus généralement un oxyde métallique. Ces exemples de matériaux ont tous une résistivité suffisante pour ne pas altérer le fonctionnement optique de la structure MIM et un TCR par exemple compris entre environ 1% et 5%, contrairement à un matériau thermométrique correspondant à du Ti, du Pt ou du manganite de lantane qui ont une trop faible résistivité, inférieure à environ 0,1 Ohm.cm. De plus, les exemples de matériaux précédemment cités pour le matériau thermométrique 116 sont transparents ou faiblement absorbants vis-à-vis des longueurs d'ondes destinées à être détectées par le détecteur bolométrique 100, et présentent un fort coefficient de température et un faible bruit basse fréquence. Selon la nature du matériau thermométrique 116, son épaisseur est par exemple comprise entre environ 50 nm et 200 nm.

Dans ce premier mode de réalisation, l'épaisseur, ou hauteur, e de l'espace vide 110 n'intervient pas dans le rendement d'absorption du détecteur bolométrique 100. Ainsi, cette épaisseur e peut être d'une valeur quelconque, mais au moins telle que la membrane 104 et le substrat 102 soient espacés l'un de l'autre d'une distance suffisante pour éviter un contact entre eux en raison des contraintes mécaniques et électrostatiques pouvant être subies par la membrane 104. Cette épaisseur e peut également être ajustée de manière à limiter l'absorption parasite provenant des bras d'isolation thermique 106 et des régions de contact formées par les portions de la couche électriquement conductrice 124 en contact avec le matériau thermométrique 116. Cette épaisseur e est par exemple comprise entre environ 1 µm et 5 µm.

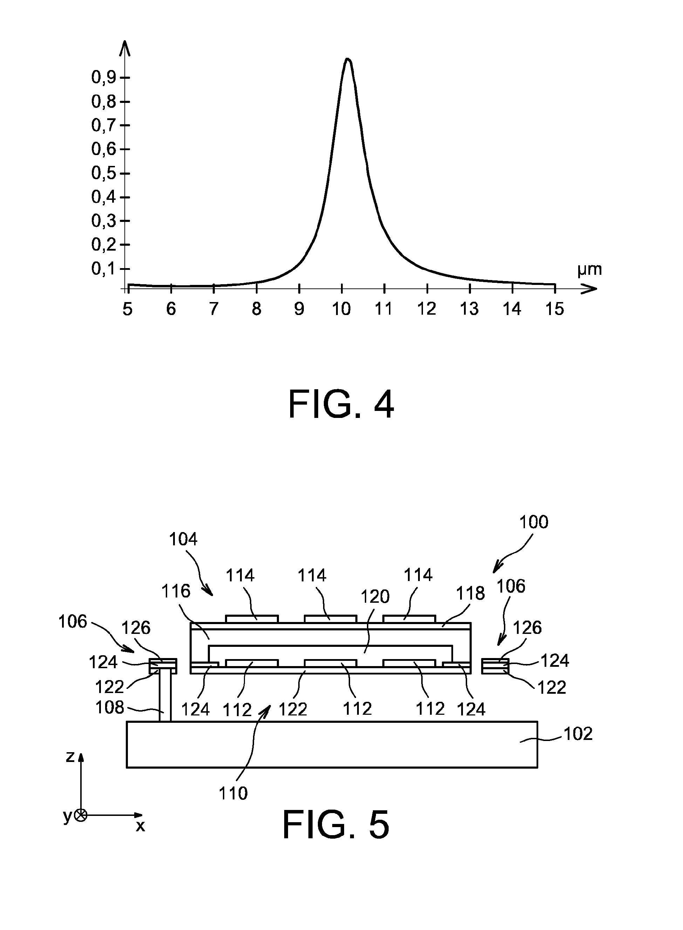

La figure 4 représente le rendement d'absorption en fonction de la longueur d'onde, ici autour de 10 µm, obtenu avec le détecteur bolométrique 100 précédemment décrit, comportant un matériau thermomètre 116 en silicium amorphe d'épaisseur égale à environ 150 nm, des éléments métalliques 112 et 114 d'épaisseur égale à environ 100 nm, les éléments métalliques supérieurs 114 étant chacun de forme carrée de côté égal à environ 1,375 µm et disposés les uns par rapport aux autres avec une période, ou un pas, égale à environ 2,75 µm (c'est-à-dire réalisés avec un taux de remplissage de la surface de la membrane 104 de l'ordre de 25 %). En ajustant les dimensions et le pas des éléments métalliques supérieurs 114 des structures MIM, il est possible de modifier la valeur de la longueur d'onde pour laquelle l'absorption réalisée par le détecteur 100 est maximale, permettant ainsi la réalisation de détecteurs multispectraux. Sur la figure 4, la détection s'effectue autour d'une longueur d'onde égale à environ 10 µm sur une largeur d'environ 1 µm (pour un rendement d'absorption d'au moins 0,5). Le pic de détection, se trouvant à environ 10 µm sur la figure 4, peut être déplacé dans une gamme de valeurs par exemple comprises entre environ 2 µm et 16 µm.

On se réfère maintenant à la figure 5 qui représente une vue en coupe de profil du détecteur bolométrique 100 selon un deuxième mode de réalisation.

Par rapport au premier mode de réalisation précédemment décrit, la membrane 104 ne comporte pas un seul élément métallique inférieur 112 commun à l'ensemble des structures MIM. Ici, chacune des structures MIM de l'élément absorbeur du détecteur bolométrique 100 comporte un élément métallique inférieur 112 distinct.

Chacun des éléments métalliques inférieurs 112 est disposé en regard d'un des éléments métalliques supérieurs 114 et comporte ici des dimensions, dans le plan (X,Y), sensiblement similaires à celles de l'élément métallique supérieur 114 en regard duquel il est disposé. L'espacement entre les éléments métalliques inférieurs 112, c'est-à-dire le pas de ces éléments 112, est également similaire à celui entre les éléments métalliques supérieurs 114. En variante, les dimensions et/ou la forme et/ou le pas des éléments métalliques inférieurs 112 pourraient être différents de ceux des éléments métalliques supérieurs 114. Les épaisseurs des éléments métalliques inférieurs 112 sont ici similaires les unes par rapport aux autres, et par exemple de même valeur que celle de l'élément métallique inférieur 112 précédemment décrit pour le premier mode de réalisation. En outre, des portions de la deuxième couche diélectrique 120 sont disposées entre les éléments métalliques inférieurs 112 afin de les isoler les uns par rapport aux autres. Les autres éléments du détecteur bolométrique 100 selon ce deuxième mode de réalisation sont similaires à ceux du détecteur bolométrique 100 selon le premier mode de réalisation.

Par rapport à un unique élément métallique inférieur 112 commun à toutes les structures MIM de l'élément absorbeur du détecteur bolométrique 100 comme dans le premier mode de réalisation, l'utilisation de plusieurs éléments métalliques inférieurs 112 distincts pour chacune des structures MIM du détecteur bolométrique 100 selon ce deuxième mode de réalisation permet de réduire la constante thermique du détecteur bolométrique 100, au détriment toutefois d'une moins bonne sélectivité. Ainsi, le choix concernant la structure du ou des éléments métalliques inférieurs 112 est réalisé selon les contraintes à remplir par le détecteur bolométrique 100 en ce qui concerne la constante de temps et la sélectivité recherchées.

De plus, l'utilisation de plusieurs éléments métalliques inférieurs 112 distincts n'est pas pénalisante vis-à-vis de l'absorption résiduelle obtenue dans la mesure où cette configuration permet de limiter les régions susceptibles de dissiper l'énergie électromagnétique reçue en dehors de la résonance recherchée, et permet d'éviter que des zones électriquement conductrices présentant une résistance par carré élevée ne soient exposées au rayonnement incident.

En variante du premier et du deuxième mode de réalisation précédemment décrits, le détecteur bolométrique 100 peut comporter en outre un réflecteur disposé sur le substrat 102, en regard de la membrane 104, afin que la cavité 110 forme une cavité réflectrice. Dans ce cas, l'épaisseur e de la cavité 110 est choisie pour que la distance entre le réflecteur, correspondant par exemple à une couche métallique disposée sur la face supérieure du substrat 102, et le ou l'un des éléments métalliques inférieurs 112 soit égal à environ λ/2 afin que la cavité 110 forme une cavité réflectrice permettant de maximiser la réflexion entre le réflecteur et la membrane 104.

Quel que soit le mode de réalisation, une telle cavité réflectrice λ/2 est avantageuse.

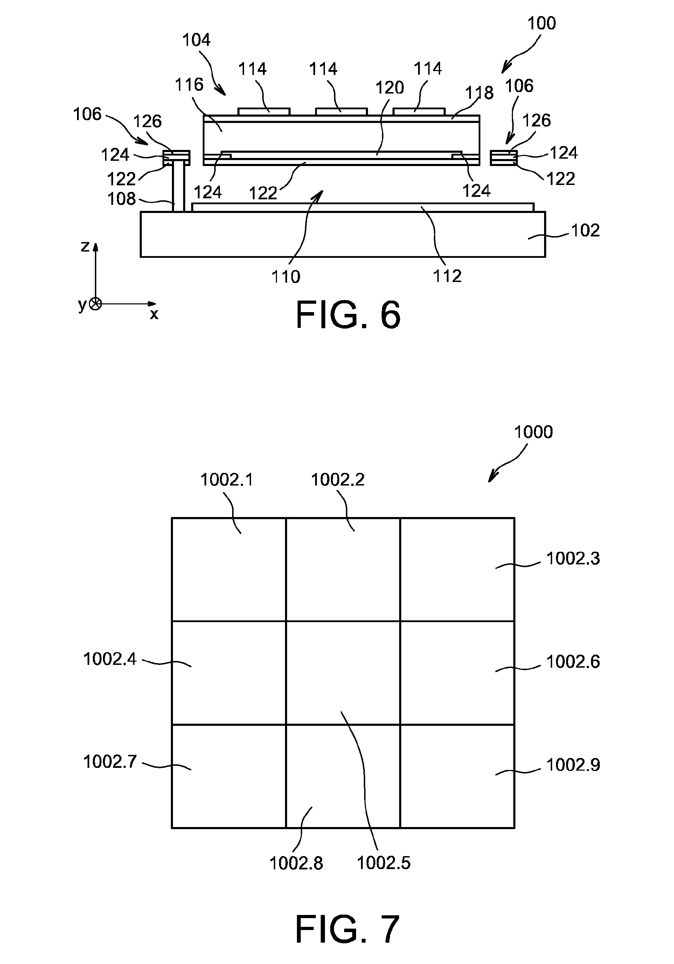

La figure 6 représente une vue en coupe de profil du détecteur bolométrique 100 selon un troisième mode de réalisation.

Comme dans le premier mode de réalisation, un unique élément métallique inférieur 112 est commun à toutes les structures MIM de l'élément absorbeur du détecteur bolométrique 100. Par contre, contrairement au premier mode de réalisation dans lequel l'élément métallique inférieur 112 est disposé dans la membrane 104 suspendue au-dessus du substrat 102, l'élément métallique inférieur 112 est ici disposé non pas dans la membrane 104 suspendue, mais sur le substrat 102 telle que la cavité 110 soit formée entre l'élément métallique inférieur 112 et la membrane 104. Dans ce troisième mode de réalisation, les structures MIM de l'élément absorbeur du détecteur bolométrique 100 comportent donc chacune comporte un élément métallique supérieur 114 et l'élément métallique inférieur 112 (ici commun à toutes les structures MIM). De plus, les éléments diélectriques des structures MIM sont formés par le matériau thermométrique 116, la première couche diélectrique 118, la deuxième couche diélectrique 120 (qui, en variante, peut être omise), la troisième couche diélectrique 122 ainsi que la cavité 110. Dans ce troisième mode de réalisation, l'épaisseur e de la cavité 110 est prise en compte dans le calcul de l'épaisseur du diélectrique des structures MIM qui peut être inférieure ou égale à λ/4n, ou avantageusement inférieure ou égale à λ/10n.

Dans ce troisième mode de réalisation, l'épaisseur de l'élément métallique inférieur 112 est choisie suffisamment épaisse pour limiter les pertes par effet Joule en son sein, et par exemple telle que la résistivité de l'élément métallique inférieur 112 soit au moins égale à environ 0,1 Ohm/carré.

Par rapport au premier mode de réalisation, ce troisième mode de réalisation a pour avantage d'abaisser la constante de temps du détecteur bolométrique 100. De plus, le détecteur bolométrique 100 selon ce troisième mode de réalisation peut être réalisé à moindres coûts car le procédé mis en oeuvre pour réaliser ce détecteur bolométrique 100 suit le processus des étapes classiques des procédés mis en oeuvre pour réaliser des bolomètres. En outre, par rapport aux bolomètres de l'art antérieur, un seul niveau de photolithographie supplémentaire peut être réalisé pour former les éléments métalliques supérieurs 114.

En variante de ce troisième mode de réalisation, plusieurs éléments métalliques inférieurs 112, formant chacun l'élément métallique inférieure d'une des structures MIM, peuvent être disposés sur le substrat 102.

Quel que soit le mode de réalisation, la membrane 104 du détecteur bolométrique 100 est avantageusement réalisée en couches minces et les bras d'isolation thermique 106 du détecteur bolométrique 100 sont finement définis pour réaliser une isolation thermique efficace de la membrane 104 par rapport au substrat 102 et au circuit électronique formé dans le substrat 102. La membrane 102 et les bras d'isolation thermique 106 sont par exemple réalisés sur une couche sacrificielle disposée sur le substrat 102, de préférence en polyimide et d'épaisseur comprise entre environ 1 et 5 µm. L'épaisseur de cette couche sacrificielle correspond à l'épaisseur e de la cavité 110 qui sera formée entre la membrane 104 et le substrat 102, et par exemple égale à environ la moitié de la longueur d'onde pour laquelle le rendement d'absorption du détecteur bolométrique 100 est maximal lorsqu'un réflecteur est présent sur le substrat 102 afin de former sous la membrane 104 une cavité réflectrice. Dans le cas du troisième mode de réalisation, l'élément métallique inférieur 112 est formé sur le substrat 102 préalablement à la couche sacrificielle qui est déposée ensuite en recouvrant l'élément métallique inférieur 112.

Les couches minces diélectriques de la membrane 104, c'est-à-dire la première couche diélectrique 118, la deuxième couche diélectrique 120 et la troisième couche diélectrique 122, sont par exemple réalisées par des dépôts à basse température tels que des dépôts par pulvérisation cathodique ou par décomposition plasma (PECVD). La gravure de ces couches, mise en oeuvre après leur dépôt, peut être réalisée par attaque chimique assistée par plasma.

La couche électriquement conductrice 124 est réalisée via un dépôt, par exemple par pulvérisation cathodique, puis structurées par gravure, par exemple par une gravure chimique ou par une gravure par plasma.

Le matériau thermométrique 116 est par exemple déposé à basse température, par exemple par pulvérisation cathodique, décomposition thermique (LPCVD) ou plasma (PECVD). Le dopage éventuel du matériau thermométrique 116 est réalisé en introduisant un gaz dopant (par exemple du BF₃ ou du PH₃) dans le réacteur utilisé pour son dépôt, ou bien par implantation ionique. La gravure du matériau thermométrique 116 est généralement réalisée par un procédé d'attaque chimique assistée par plasma.

Quel que soit le mode de réalisation, plusieurs détecteurs bolométriques 100 sont avantageusement réalisés de manière collective les uns à côté des autres sous la forme d'une matrice, chaque détecteur bolométrique 100 formant un pixel de cette matrice de détection.

Dans chaque détecteur bolométrique 100, la résistance du matériau thermométrique varie en fonction de la température de la scène imagée. Or, les variations de la température de la scène qui sont destinées à être mesurées sont très faibles. Afin de détecter plus facilement ces variations, le circuit électronique intégré au substrat 102 peut comporter un étage amplificateur ou intégrateur à fort gain afin d'amplifier les signaux délivrés par les détecteurs bolométriques 100. Afin d'augmenter la sensibilité de lecture des détecteurs bolométriques 100, il est possible de dériver la fraction invariante du courant mesuré, correspondant à la température de fond de la scène imagée, dans une branche dite « d'ébasage » des détecteurs, pour n'envoyer que la partie variable du courant, correspondant aux variations de températures destinées à être mesurées, vers l'étage amplificateur ou intégrateur du circuit électronique pour éviter de le saturer. Pour cela, une solution peut consister à utiliser comme résistance d'ébasage des bolomètres dits d'ébasage, réalisés à partir des mêmes matériaux que ceux utilisés pour réaliser les détecteurs bolométriques 100, éventuellement thermalisés à la température du plan focal et qui ne réalisent pas de détection de température de la scène du fait que ces bolomètres d'ébasage ne comportent pas de bras d'isolation thermique et comportent donc leur membrane reliée thermiquement au substrat par les éléments de support.

En outre, il est possible qu'une matrice de détecteurs bolométriques 100 soit formée de plusieurs sous-matrices comportant chacune un ou plusieurs détecteurs bolométriques 100 tels que précédemment décrits, ces détecteurs bolométriques comportant des structures MIM de dimensions et/ou de forme différentes d'une sous-matrice à l'autre telles que chaque sous-matrice soit apte à réaliser une détection d'une gamme de longueurs d'ondes différente de celles aptes à être détectées par les autres sous-matrices, formant ainsi une matrice de détection multispectrale.

La figure 7 représente schématiquement une partie d'un dispositif de détection 1000 comportant une matrice de détection multispectrale.

Cette matrice de détection multispectrale comporte huit sous-matrices 1002.1 à 1002.4 et 1002.6 à 1002.9 comportant chacune un ou plusieurs détecteurs bolométriques 100 tels que précédemment décrits. Dans l'exemple décrit ici, chacune de ces sous-matrices 1002.1 à 1002.4 et 1002.6 à 1002.9 comporte n*n détecteurs bolométriques agencés en matrice carrée, avec n nombre entier compris par exemple entre 1 et 10. Chacune des sous-matrices 1002.1 à 1002.4 et 1002.6 à 1002.9 est apte à réaliser une détection d'une gamme de longueurs d'ondes définies par les paramètres (dimensions, forme, pas) des structures MIM des détecteurs bolométriques de chaque sous-matrice.

Dans l'exemple de la figure 7, le ou les détecteurs de la sous-matrice 1002.5 servent de référence aux détecteurs bolométriques des autres sous-matrices 1002.1 à 1002.4 et 1002.6 à 1002.9. Le ou les détecteurs de la sous-matrice 1002.5 ne sont pas sensibles au rayonnement reçu par le dispositif de détection 1000, par exemple en réalisant ce ou ces détecteurs tels qu'ils ne comportent pas de structure MIM comme les détecteurs bolométriques des autres sous-matrices. Ainsi, en soustrayant la ou les valeurs du ou des signaux délivrés par le ou les détecteurs de la sous-matrice 1002.5 aux valeurs des signaux délivrés par les détecteurs bolométriques des autres sous-matrices, il est possible de supprimer le mode commun présent dans les signaux délivrés par les détecteurs des autres sous-matrices 1002.1 à 1002.4 et 1002.6 à 1002.9.

De plus, une ou plusieurs des sous-matrices 1002.1 à 1002.4 et 1002.6 à 1002.9 peuvent comporter des bolomètres dits d'ébasage comme précédemment décrit.

Quel que soit le mode de réalisation, les dimensions des détecteurs bolométriques 100 sont fonction de la taille du pixel destiné à être formé par les détecteurs bolométriques 100.

## Revendications

1. Détecteur bolométrique (100) comportant au moins :
- un substrat (102) ;
- une membrane (104) suspendue au-dessus du substrat (102) par des éléments de support (108) ;
- un élément absorbeur comprenant au moins une structure MIM formée d'un élément métallique inférieur (112), d'un élément métallique supérieur (114) et d'un élément diélectrique (110, 116, 118, 120, 122) disposé entre l'élément métallique inférieur (112) et l'élément métallique supérieur (114) ;
- un élément thermomètre comprenant au moins un matériau thermométrique (116) ;
dans lequel la membrane (104) comporte au moins l'élément métallique supérieur (114) de la structure MIM et le matériau thermométrique (116), et dans lequel le matériau thermométrique (116) fait partie de l'élément diélectrique (110, 116, 118, 120, 122) de la structure MIM.

2. Détecteur bolométrique (100) selon la revendication 1, dans lequel le matériau thermométrique (116) comporte une résistivité électrique supérieure à environ 0,1 Ω.cm et une permittivité dont une valeur de la partie réelle est positive et dont une valeur de la partie imaginaire est inférieure à environ 20 % de celle de la partie réelle à une longueur d'onde pour laquelle le rendement d'absorption du détecteur bolométrique (100) est maximal.

3. Détecteur bolométrique (100) selon l'une des revendications précédentes, dans lequel une distance entre l'élément métallique inférieur (112) et l'élément métallique supérieur (114) est inférieure ou égale λ/(4n), avec λ correspondant à une longueur d'onde pour laquelle le rendement d'absorption du détecteur bolométrique (100) est maximal et n correspondant à l'indice de réfraction effectif de la structure MIM.

4. Détecteur bolométrique (100) selon l'une des revendications précédentes, dans lequel la membrane (104) comporte l'élément métallique inférieur (112) de la structure MIM.

5. Détecteur bolométrique (100) selon la revendication 4, comportant en outre un réflecteur disposé sur le substrat (102), et une cavité (110) réflectrice formée entre le réflecteur et l'élément métallique inférieur (112) de la structure MIM telle qu'une distance entre le réflecteur et l'élément métallique inférieur (112) de la structure MIM est égale à environ la moitié d'une longueur d'onde pour laquelle le rendement d'absorption du détecteur bolométrique (100) est maximal.

6. Détecteur bolométrique (100) selon l'une des revendications 1 à 3, dans lequel l'élément métallique inférieur (112) de la structure MIM est disposé sur le substrat (102) tel qu'un espace vide (110) faisant partie de l'élément diélectrique (110, 116, 118, 120, 122) de la structure MIM soit disposé entre la membrane (104) et l'élément métallique inférieur (112).

7. Détecteur bolométrique (100) selon l'une des revendications précédentes, dans lequel la membrane (104) comporte en outre une première couche diélectrique (118) isolant électriquement l'élément métallique supérieur (114) vis-à-vis du matériau thermométrique (116), et une deuxième couche diélectrique (120) isolant électriquement le matériau thermométrique (116) vis-à-vis de l'élément métallique inférieur (112), et dans lequel la première couche diélectrique (118) et la deuxième couche diélectrique (120) font parties de l'élément diélectrique (110, 116, 118, 120, 122) de la structure MIM.

8. Détecteur bolométrique (100) selon l'une des revendications précédentes, dans lequel l'élément absorbeur comporte plusieurs structures MIM comportant chacune un élément métallique supérieur (114) distinct des éléments métalliques supérieurs (114) des autres structures MIM, et dans lequel le matériau thermométrique (116) est commun aux structures MIM.

9. Détecteur bolométrique (100) selon la revendication 8, dans lequel chaque structure MIM comporte un élément métallique inférieur (112) distinct des éléments métalliques inférieurs (112) des autres structures MIM, ou dans lequel les structures MIM comportent un élément métallique inférieur (112) commun à toutes les structures MIM.

10. Détecteur bolométrique (100) selon l'une des revendications précédentes, dans lequel le matériau thermométrique (116) est relié électriquement à un circuit électronique du substrat (102) par au moins une couche électriquement conductrice (124) de la membrane (104) et par les éléments de support (108).

11. Détecteur bolométrique (100) selon l'une des revendications précédentes, dans lequel la membrane (104) est reliée mécaniquement et électriquement aux éléments de support (108) par des bras d'isolation thermique (106).

12. Dispositif de détection thermique (1000) comportant plusieurs détecteurs bolométriques (100) selon l'une des revendications précédentes, lesdits détecteurs bolométriques (100) étant disposés en formant une matrice.

13. Dispositif (1000) selon la revendication 12, dans lequel les détecteurs bolométriques (100) sont agencés en formant plusieurs sous-matrices (1002.1 - 1002.4; 1002.6 - 1002.9), les détecteurs bolométriques (100) de chacune desdites sous-matrices (1002.1 - 1002.4; 1002.6 - 1002.9) étant aptes à réaliser une détection d'une gamme de longueurs d'ondes différentes de celles destinées à être détectées par les détecteurs bolométriques (100) des autres sous-matrices (1002.1-1002.4 ; 1002.6 -1002.9).

14. Dispositif (1000) selon l'une des revendications 12 ou 13, dans lequel la matrice comporte au moins un détecteur bolométrique d'ébasage comportant une membrane suspendue au-dessus du substrat et reliée thermiquement au substrat.

15. Dispositif (1000) selon l'une des revendications 12 à 14, dans lequel la matrice comporte au moins un détecteur bolométrique de référence ne comportant pas de structure MIM.
